# EUROPEAN PATENT SPECIFICATION

(11) **EP 1 833 117 B1**
(45) Date of publication and mention of the grant of the patent: **12.08.2015**
(21) Application number: 07380066.6
(22) Date of filing: 07.03.2007
(51) Int. Cl.: H01R 4/36, F16B 31/02

(54) **A screw for electric connectors**
Schraube für elektrische Verbinder
Vis pour connecteurs électriques

(30) Priority: 08.03.2006 ES 200600568; 12.04.2006 ES 200600954
(43) Date of publication of application: 12.09.2007
(73) Proprietor: Ridelin, S.L., 08240 Manresa (Barcelona) (ES)
(72) Inventor: Capelles de la Fuente, Rosa, 08240 Manresa (ES)
(74) Representative: Morgades y Manonelles, Juan Antonio

(56) References cited:
- EP-A- 0 984 176
- WO-A-03/067102
- DE-A1- 10 234 475
- ES-A1- 2 125 180
- GB-A- 1 204 294
- GB-A- 2 281 599

## Description

### OBJECT OF THE INVENTION

The present invention has as its object a screw for electric connectors.

### FIELD OF THE INVENTION

The present invention relates to the electric connectors being used for carrying out splicings, branchings and terminations.

### BACKGROUND OF THE INVENTION

Many types of solid and hollow screws are commercially available which are used in the electric connectors.

The screws being used in the electric connectors are threadingly engaged into the corresponding bore of the connector in order to thus carry out the clamping of the cable or lead, said bores essentially being radial and threaded through bores. Said known screws comprise at least one annular necked-down portion being in correspondence with a respective clamping torque bringing about the breakage of the screw at the respective necked-down portion.

Those basically being in existence are hollow and solid screws in both cases having a structure, thicknesses and necked-down portions being such that when applying a clamping torque against the cable being arranged in the connector the one-piece or multi-piece screw is broken, a portion of it being thus left inside the bore of the connector.

Upon the breakage of the screw because of the clamping operation portions of the screw in many cases project from the bore of the connector and thus create a danger situation because they can affect the insulation of the connection.

The case can as well arise that the screw surpasses the threaded surface of the connector and thus comes out of its housing, this then preventing the connector from having a normal operation.

The closest prior art document is the European patent no. EP-A-0984176, which discloses according to the preamble of claim 1, a bolt with several thread sections (3) and a head section (5). This is connected to the threaded sections via a first preferred breakage point (7), and further preferred breakage points (9) between the thread sections, in the form of cross-sectional narrowings. The breaking torque both increases and decreases from the furthest thread section to the head section, so that at least one staged preferred breakage point is formed.

Another related document is Spanish patent no. ES-A1-2125180, which discloses a terminal electrical connector for a conductor, which comprises: at least one screw 22 equipped with a circular flange 24; a hollow body 2 which can accommodate the end of the conductor and with a threaded orifice 8 for insertion of the screw 22, at least one tubular intermediate part 10, threaded externally in order to screw into the orifice 8 in whose inner surface 14 is a step 16 which defines a second cylindrical section 18, of larger diameter, and with an inner threading able to be threaded onto the screw 22. The circular flange can be applied to the step 16 such that, when applied, the tubular intermediate part 10 and this threaded screw 22 screwed to it become integral in their movements.

The aforementioned drawbacks have now been totally obviated by means of the screw being the object of the present invention. Said screw has structural features being such that they prevent any broken portion of the screw from projecting from the bore and the thread of the screw from possibly surpassing the threaded surface of the connector.

The present invention does besides comprise the combination of a screw and a bushing, the screw being provided with several necked-down portions and stops of different diameters and contours being adapted to the thickness of the connector and hence to the length of the threaded portion of the bore of the connector, the breakage of the screw being thus in correspondence with and adapting to the outer surface of the connector and to the cable or lead being arranged inside this latter, irrespective of the thickness of said cable or lead.

### SUMMARY OF THE INVENTION

According to what has been set forth above the improved screw for electric connectors being the object of the present invention is disclosed in claim 1.

According to an embodiment the screw for electric connectors is characterised in that it consists in a screw assembly comprising in combination a clamping screw and a bushing, said clamping screw having an intermediary portion between the head of the screw and the threaded portion and being at said intermediary portion provided with at least two necked-down portions being each associated to a respective stop, of which the necked-down portion and stop being closer to the threaded portion respectively have a smaller diameter and contour as compared with the necked-down portion and stop being closer to the head of the screw, the aforementioned bushing being internally and externally threaded in order to thus be in a position to be threadingly engaged into the corresponding bore of the connector, the clamping screw being fit to be threadingly engaged into the inside of said bushing in order to thus carry out the clamping of the cable, the bushing being thus fit to increase the length of the threaded portion of the bore for the clamping screw to be threadingly engaged into the connector and thus making up a clamping screw, the bushing being provided with an outer rim serving as an end stop for defining the end of the screwing in of the bushing into the bore, when carrying out the screwing in operation and upon having the respective stop abuttingly contacted with the outer rim of the bushing the screw breaking at one of the necked-down portions in correspondence with the thickness of the cable being arranged in the connector.

According a further embodiment the clamping screw comprises two necked-down portion and stop pairs being positioned at the ends of the intermediary portion and respectively adjacent to the head of the screw and the threaded portion.

According to another embodiment the breakage of the necked-down portion having a smaller diameter and being closer to the threaded portion during the clamping operation and once the respective smaller stop has abuttingly contacted the outer rim of the bushing and has thus set the final limit to the screwing in operation corresponds to a cable having a bigger thickness, and the breakage of the necked-down portion having a bigger diameter and being closer to the head of the screw during the clamping operation and once the smaller stop has passed along the threaded portion of the bushing and the respective bigger stop has abuttingly contacted the outer rim of the bushing and has thus set the final limit to the screwing in operation corresponds to a cable having a smaller thickness.

According to another embodiment, after the breakage the stops are flush with the rim of the bushing and with the surface of the connector, and the rest of the clamping screw is removed.

The rim of the bushing in its turn has a recessed portion being fit to receive the stops of the clamping screw.

When the breakage of the necked-down portion having a smaller diameter takes place at an intermediary position in the bushing during the clamping operation once the smaller stop has passed along a portion of the thread of the bushing, that is because a cable having an intermediary thickness is arranged in the connector, the rest of the clamping screw being thereupon removed.

The head of the screw has the configuration corresponding to the desired type of clamping wrench, and the stops of the clamping screw and the outer rim of the bushing are annular and are such as to be put in a flush arrangement with respect to the surface of the connector.

The end-of-travel stop is preferentially annular.

These and other characterising features will be best made apparent by the following detailed description whose understanding will be made easier by the accompanying four sheets of drawings showing a practical embodiment being cited only by way of example not limiting the scope of the present invention.

### DESCRIPTION OF THE DRAWINGS

In the drawings:
Fig. 1 is a perspective view of the screw being the object of the present invention;
Fig. 2 is an elevational view of the screw;
Fig. 3 is a plan-view of the screw as seen from above the head;
Fig. 4 is an elevational view of an electric connector having several screws of the present invention having been placed but not yet tightened;

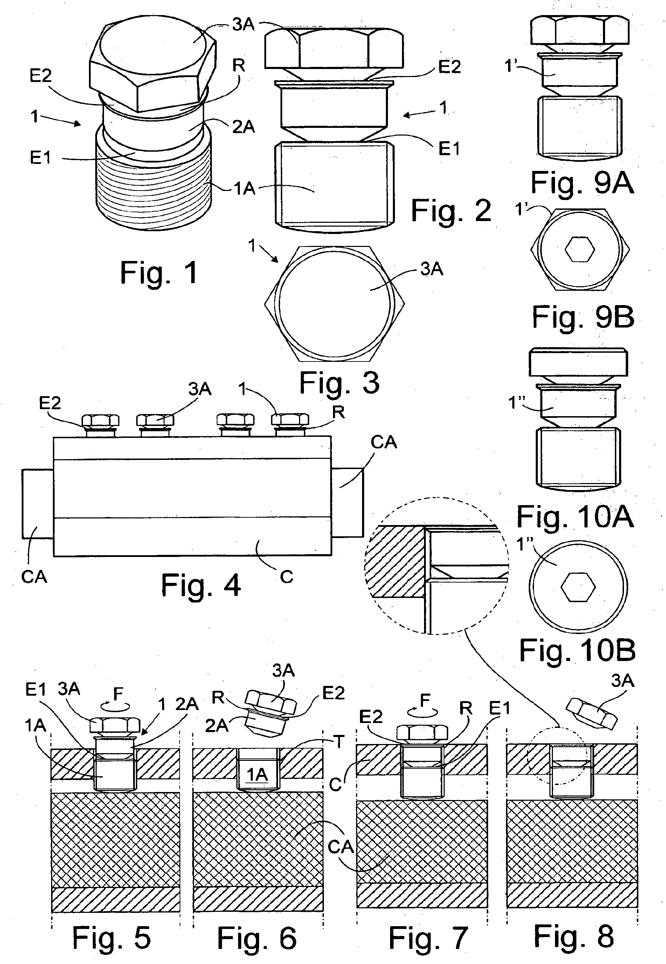

Figs. 5, 6, 7 and 8 respectively show in a fragmentary, sectional view the connector, a screw and the cable in different stages corresponding to the screwing in of the screw with a cable having a big diameter and to the point of breakage of the first necked-down portion, the head with the intermediary portion being removed at said point, as well as to the screwing in with a cable having a smaller diameter and to the point where the stop reaches the end of travel, the breakage of the second necked-down portion taking place at said point, the head of the screw being thereupon removed. The detail I from Fig. 8 shows at an enlarged scale the stop being flush with the edge of the bore of the connector;
Figs. 9A and 9B are an elevational view and a plan-view from above the head of the screw of the invention, respectively, said views being similar to Figs. 2 and 3 but in this case incorporating in a central and inner arrangement in the head a hexagonal socket for an Allen wrench;
Figs. 10A and 10B are each a view being similar to Figs. 9A and 9B but in this case showing a round head not having a hexagonal outer contour;
Figs. 11, 11A, 11B and 11C are each a perspective view, an elevational view, a longitudinally sectional elevation and a plan-view of the clamping screw forming part of the screw assembly being the object of the present invention, respectively;
Figs. 12, 12A, 12B and 12C are each a perspective view, an elevational view, a longitudinally sectional elevation and a plan-view of the bushing forming part of the screw assembly being the object of the invention, respectively;
Figs. 13, 13A, 13B and 13C are each a perspective view, an elevational view, a longitudinally sectional elevation and a plan-view of the screw assembly being the object of the present invention, respectively, these latter views illustrating the clamping screw having been screwed in up to the stop into the bushing;
Fig, 14 is an exploded, elevational view of the clamping screw and the bushing and the electric connector with the lead in a fragmentary, longitudinal section;
Fig. 15 is a view being similar to Fig. 14 but illustrating the screw assembly with the clamping screw having been screwed in up to the stop into the bushing, both these latter being separated from the connector;
Figs. 16 and 17 illustrate the connector with a cable having a bigger thickness in a fragmentary section, said Fig. 16 showing the screw assembly clamping the cable, and said Fig. 17 showing the breakage of the clamping screw at the smaller necked-down portion and the removal of the rest;
Figs. 18 and 19 illustrate the connector with a cable having an intermediary thickness in a fragmentary section, said Fig. 18 showing the screw assembly clamping the cable, and said Fig. 19 showing the breakage of the clamping screw at the smaller necked-down portion at an intermediary position inside the bushing and the removal of the rest;
Figs. 20 and 21 illustrate the connector with a cable having a smaller thickness in a fragmentary section, said Fig. 20 showing the screw assembly clamping the cable, and said Fig. 21 showing the breakage of the clamping screw at the bigger necked-down portion and the removal of the rest; and
Figs. 22, 22A and 23, 23A are each a clamping screw like that of the foregoing Figures, with different screw heads as a by way of example.

### DETAILED DESCRIPTION OF A PREFERRED EMBODIMENT

According to the drawings and referring to Figs. 1 through 8 the screw for electric connectors as per the present invention consists in a screw being generally designated at -1-, said screw being fit to be screwed into a bore -T- of the connector -C- in which respective cables -CA- are arranged in a mutually opposite arrangement.

The body of the screw -1- comprises an intermediary portion -2A- between the end portions corresponding to the threaded portion -1A- being fit to be screwed into the bore -T- of the connector -C- and to the head -3A- of the screw.

The screw -1- comprises a first annular necked-down portion -E1- being adjacent to the threaded portion -1A-. When carrying out the clamping against the corresponding cable -CA- the breakage of the first necked-down portion takes place and the threaded portion -1A- is thereby left inside the bore -T- of the connector -C- in such a way that said threaded portion is thus totally housed therein, and the rest of the body of the screw -1-comprising the head -3A- of the screw and the intermediary portion -2A- is removed, as can be clearly seen in Fig. 6. The initial tightening -F- of the screw - 1- is illustrated in Fig. 5.

The screw -1- comprises an end-of-travel stop -R-being adjacent to a second necked-down portion -E2- being provided at the outer edge of the intermediary portion - 2A-. When tightening the screw, as shown in Fig. 7, when the stop -R- reaches the end-of-travel position it prevents the screw from being screwed in any further and thereby brings about the breakage of the second necked-down portion, said stop -R- being thereby arranged in a flush arrangement with respect to the edge of the bore, as shown at a larger scale in the detail I of Fig. 8, the intermediary portion -2A- and the threaded portion -1A-being thus left inside the bore -T- in such a way that they are totally housed therein, as shown in Fig. 8, the head -3A- of the screw being thereupon removed.

As can be observed, both if the breakage takes place at the first or at the second necked-down portion the different portions of the screw -1- are dimensioned in combination with the necked-down portions -E1- and -E2-, in such a way that when the screw -1- breaks those portions being left in the bore -T- are housed inside of it and thereby preclude any possible damage to the insulation of the connection.

The end-of-travel stop -R- is as well dimensioned in such a way that the threaded portion -1A- of the screw - 1- cannot surpass the threaded surface of the bore -T-, this preventing the screw -1- from coming out of its housing and being thus stuck in the bore.

In accordance with that, the head -3A- of the screw can have different shapes from among which those being illustrated in Figs. 9A and 9B corresponding to a hexagonal head with a hexagonal socket for an Allen wrench and those being illustrated in Figs. 10A and 10B corresponding to a circular head with a hexagonal socket for an Allen wrench can be pointed out by way of example. In said Figures the same reference numerals with inverted commas refer to the same portions of the screw.

The screw -1- of the present invention preferentially is a solid screw, but it can also be hollow.

Furthermore, the end-of-travel stop -R- being provided at the edge of the intermediary portion is a preferentially annular stop, but it can also consist in a protruding appendage or in several regularly spaced projections.

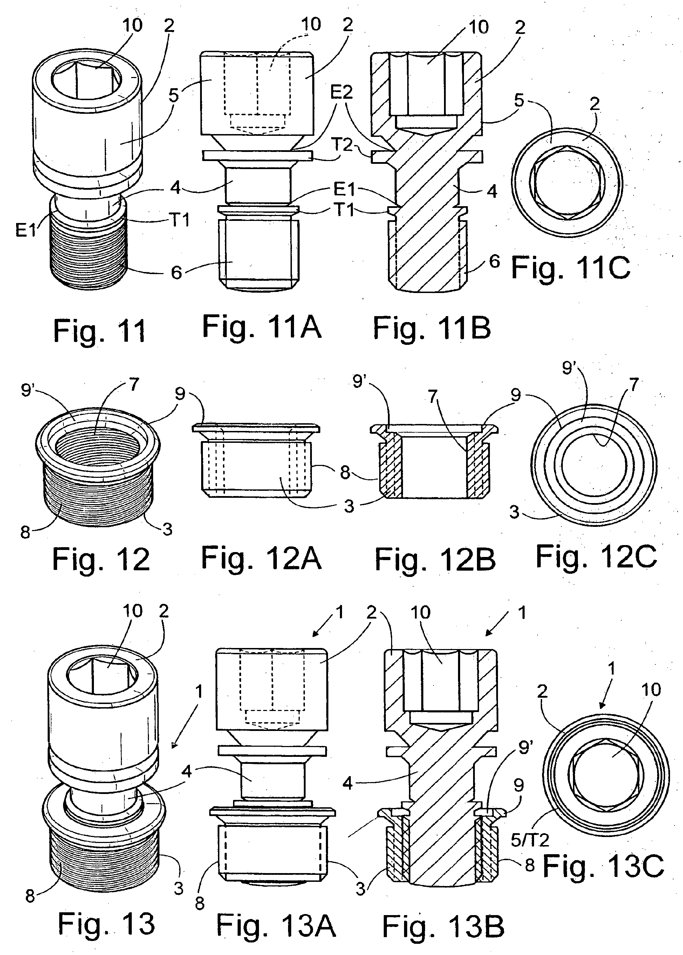

Likewise and with reference to Figs. 11A through 23A, the screw for electric connectors being generally designated at -1- consists in a screw assembly comprising a clamping screw -2- and a bushing -3-.

The clamping screw -2- has an intermediary portion - 4- between the head -5- of the screw and the threaded portion -6-, said screw being provided at said intermediary portion with two necked-down portions -E1-, -E2- being associated to respective stops -T1-, -T2-, and of said associated members the necked-down portion -E1- and the stop -T1- being adjacent to the threaded portion -6- have a diameter and a contour that are respectively smaller than those of the necked-down portion -E2- and the stop -T2- being adjacent to the head -5- of the screw.

The bushing -3- is internally and externally threaded at -7- and -8-, respectively, the external thread -8- allowing the bushing to be threadingly engaged into the corresponding bore -T- of the connector -C-, the clamping screw -2- being in its turn fit to be threadingly engaged into the inside of the bushing -3-, the clamping screw -2- thereby clamping the cable or lead -CA-. This arrangement allows the bushing -3- to bring about an increase of the length of the thread of the bore -T- for the screwing in of the clamping screw -2- into the connector -C-, the combination of the clamping screw -2- with the bushing -3- thereby making up a clamping screw -2- allowing to increase the length of the thread of the bore -T- even if the wall of the connector -C- is a relatively thin one.

The bushing -3- is provided with an outer rim -9-serving as an end stop for defining the end of the screwing in of the bushing into the bore -T-, in such a way that when screwing the clamping screw -2- into the bushing -3- said screw -2- breaks at one of the two necked-down portions -E1-, -E2- depending on the thickness of the cable -CA- being arranged in the connector -C-, the respective stop -T1-, -T2- previously contacting the outer rim -9- of the bushing -3-, as will be explained hereinafter.

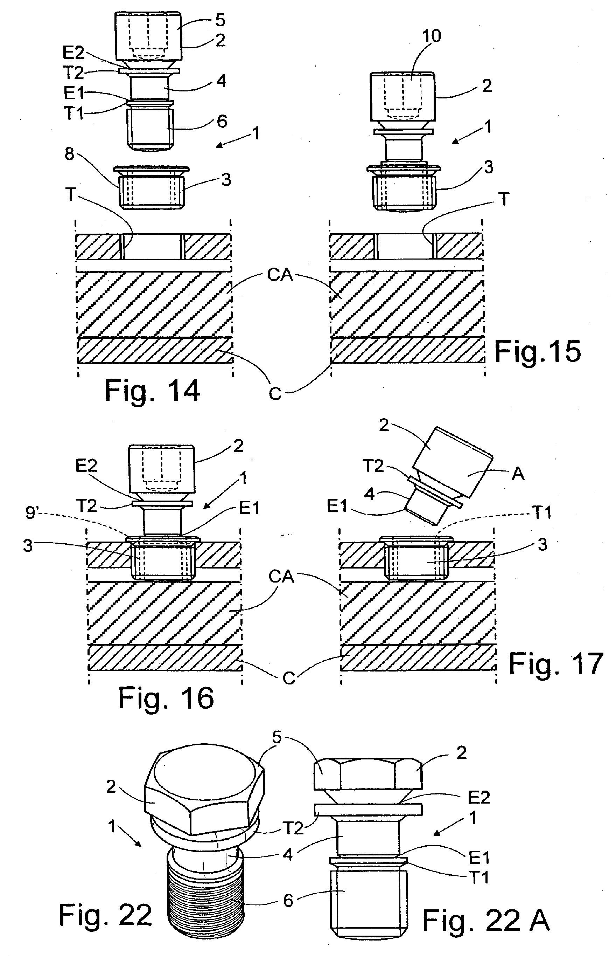

Figs. 14 through 21 illustrate the use of the screw assembly -1- of the present invention.

The screw assembly -1- in principle makes up one and the same unit, but for a more detailed depiction the clamping screw -2- and the bushing -3- have been illustrated in a separate arrangement and in an exploded elevation in Fig. 14, before their being engaged into the bore -T- of the connector -C- in which the cable -CA- is arranged.

Fig. 15 illustrates the clamping screw -2- having been threadingly engaged into the inside of the bushing - 3- with the smaller stop -T1- in contact with the annular outer rim -9- serving as an end stop for defining the end of the screwing in of the bushing -3-, said screw and bushing in their mutually engaged state thus forming the screw assembly -1-, before having proceeded to threadingly engage this latter into the bore -T-.

Fig. 16 illustrates the screw assembly -1- having been threadingly engaged into the bore -T- of the connector -C- in which a cable -CA- having a big thickness is arranged. In said Figure the clamping screw -2- starts clamping the thick cable -CA- by first putting the annular outer rim -9- of the bushing -3- in contact with the edge of the bore -T-, whereupon the smaller stop -T1- is put in contact with the rim -9- of the bushing and is thus arranged in a flush arrangement with respect to said rim because of being housed in a recessed portion -9'- being provided at said rim.

Fig. 17 illustrates the state following that of Fig. 16, wherein the clamping screw -2- once fully clamping the thick cable -CA- breaks at the necked-down portion - E1- having a smaller diameter. The portion -A-corresponding to the rest of the clamping screw -2- comes off upon said breakage, said rest of the clamping screw comprising the head -5- of the screw, the intermediary portion -4- and the bigger necked-down portion -E2- and stop -T2-. The bushing -3- and the threaded portion -6-with the smaller stop -T1- are thus left in an engaged arrangement in the bore -T-, said smaller stop being flush with the rim -9- by means of the recessed portion - 9'-, as shown.

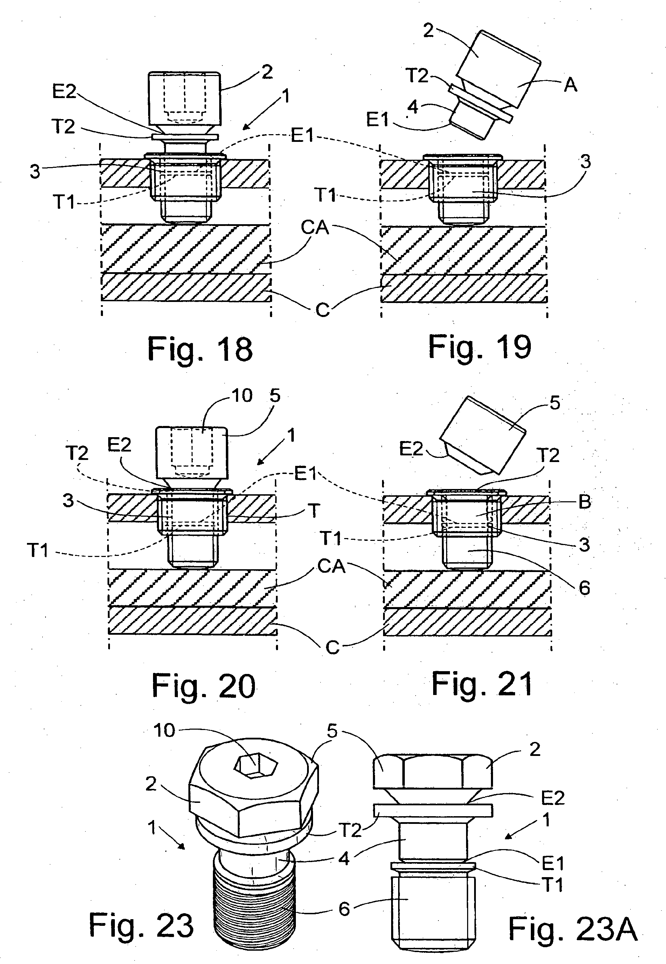

Fig. 18 illustrates the clamping screw -2- being threadingly engaged in the bushing -3- and thus clamping a cable -CA- having an intermediary thickness, wherein when the smaller stop -T1- reaches the rim -9- of the bushing -3- the end of the threaded portion -6- of the clamping screw -2- is not yet in contact with the cable - CA-, the screwing in of said threaded portion being hence continued while passing the smaller stop -T1- along the thread -7- of the bushing up to an intermediary position in said bushing -3- in which the clamping screw -2-actually clamps the cable.

Fig. 19 illustrates the state existing just after having completed the clamping operation, the breakage of the smaller necked-down portion -E1- taking place at this point in time with this latter in the intermediary position in the bushing -3-, the same portion -A-corresponding to the rest of the clamping screw -2- being then removed as in Fig. 17.

Figs. 20 and 21 finally illustrate the case wherein the cable -CA- has a smaller thickness, in which case during the screwing in of the clamping screw -2- into the bushing -3- when the smaller stop -T1- reaches the annular rim -9- of the bushing the smaller necked-down portion -E1- is strong enough to allow the screwing in of the clamping screw -2- to be continued along the bushing -3- (as in Fig. 18) until its end starts exerting a clamping action on the cable -CA- (see Fig. 20). When the bigger stop -T2- finally comes into contact with the annular rim -9- of the bushing -3- and is thus housed in the recessed portion -9'- of the rim -9- of the bushing - 3- the clamping screw -2- then breaks at the bigger necked-down portion -E2-, as shown in Fig. 21. At said point in time the head -5- of the screw comes off the rest -B- of the clamping screw -2-, said rest -B- being made up of the bigger stop -T2-, the intermediary portion -4- and the threaded portion -6- being hence left in engagement with the bushing -3- in the bore -T-, the threaded portion -6- being thus left in clamping position and thereby clamping the cable -CA- of the connector -C-.

As shown in Figs. 17 and 21, after the breakage of the clamping screw -2- at the smaller necked-down portion -E1- and at the bigger necked-down portion -E2-, respectively, the smaller stop -T1- and the bigger stop - T2- are respectively left in a flush arrangement with respect to the rim -9- of the bushing -3- and to the connector -C-.

The invention provides for the intermediary portion to be possibly provided with more than two necked-down portions -E1-, -E2-, ..., and respective stops -T1-, -T2-, ...

In an also preferential manner, the outer rim -9- of the bushing -3- and the stops -T1- and -T2- of the clamping screw -2- are annular but can have any other convenient configuration, and they can even be mere stop appendages.

As has been shown, the two pairs being formed by the respective necked-down portions -E2-, -E1- and stops -T2-, -T1- and being respectively positioned at the ends of the intermediary portion -4- are respectively adjacent to the head -5- of the screw and to the threaded portion -6-.

The head -5- of the screw has the configuration corresponding to the desired clamping wrench type, the example being illustrated in Figs. 11, 13 and 14 through 21 showing a circular head being provided with a recessed portion -10- for the engagement of an Allen wrench in order to screw the clamping screw -2- into the brushing - 3- and this latter into the bore -T- of the connector -C- . Figs. 22, 22A and 23, 23A illustrate other examples of a hexagonal head and a hexagonal head with recessed portion -10- for an Allen wrench, respectively.

## Claims

1. A screw for electric connectors which is fit to be threadingly engaged into an essentially radial and threaded through bore (T) of an electric connector (C) for carrying out the clamping of the corresponding cable (CA) being arranged in the connector (C), the screw (1, 2) having a threaded portion (1A, 6) and a head (3A, 5) and comprises a first annular necked-down portion (E1) being adjacent to the threaded portion (1A, 6), being in correspondence with a respective clamping torque so that when tightening the screw the first necked-down portion (E1) breaking and thus leaving the threaded portion (1A, 6) totally housed in the inside of the bore (T) of the connector (C), the rest of the body of the screw (1, 2) comprising the head (3A, 5) of the screw being then removed, **characterised in that** between the end portions corresponding to the threaded portion (1A, 6) being fit to be threadingly engaged into the bore (T) of the connector (C) and to the head (3A, 5) of the screw this latter has an intermediary portion (2A, 4) and an end-of-travel stop (R, T2) being adjacent to a second necked-down portion (E2) being provided at the outer edge of the intermediary portion (2A, 4), at the end of travel the clamping screw (1, 2) being stopped in its travel and thus breaking at the second necked-down portion (E2), said end-of-travel stop (R, T2) being thus flush with the edge of the bore (T), the intermediary portion (2A, 4) and the threaded portion (1A, 6) being thus totally housed in the bore (T) of the connector (C), the end-of-travel stop (R, T2) being dimensioned in such a way that the threaded portion (1A) of the screw (1) cannot surpass the threaded surface of the bore (T), this preventing the screw (1) from coming out of its housing and being thus stuck in the bore.

2. A screw as per claim 1, **characterised in that** the screw (1) comprises the clamping screw (2) in combination with a bushing (3), said clamping screw (2) having the intermediary portion (4, 2A) between the head (5, 3A) of the screw and the threaded portion (6, 1A) and being at said intermediary portion provided with at least two necked-down portions (E1, E2) being each associated to a respective stop (T1, T2), of which the necked-down portion and stop (E1, T1) being closer to the threaded portion (6, 1A) respectively have a smaller diameter and contour as compared with the necked-down portion and stop (E2, T2) being closer to the head (5, 3A) of the screw, the aforementioned busing (3) being internally (7) and externally (8) threaded in order to thus be in a position to be threadingly engaged into the corresponding bore (T) of the connector (C), the clamping screw (2) being fit to be threadingly engaged into the inside of said bushing (3) in order to thus carry out the clamping of the cable (CA), the bushing (3) being thus fit to increase the length of the threaded portion of the bore (T) for the clamping screw (2) to be threadingly engaged into the connector (C) and thus making up a clamping screw (2) being fit to be screwed in, the bushing (3) being provided with an outer rim (9) serving as an end stop for defining the end of the screwing in of the bushing into the bore (T), when carrying out the screwing in operation and upon having the respective stop (T1, T2) abuttingly contacted with the outer rim (9) of the bushing (3) the clamping screw (2) breaking at one of the necked-down portions (E1, E2) in correspondence with the thickness of the cable (CA) being arranged in the connector (C).

3. A screw as per claim 2, **characterised in that** the breakage of the necked-down portion (E1) having a smaller diameter and being closer to the threaded portion (6, 1A) during the clamping operation and once the respective smaller stop (T1) has abuttingly contacted the outer rim (9) of the bushing (3) and has thus set the final limit to the screwing in operation corresponds to a cable (CA) having a bigger thickness, and **in that** the breakage of the necked-down portion (E2) having a bigger diameter and being closer to the head (5, 3A) of the screw during the clamping operation and once the smaller stop (T1) has passed along the threaded portion (7) of the bushing (3) and the respective bigger stop (T2) has abuttingly contacted the outer rim (9) of the bushing (3) and has thus set the final limit to the screwing in operation corresponds to a cable (CA) having a smaller thickness.

4. A screw as per claim 3, **characterised in that** after the breakage the stops (T1, T2) are flush with the rim (9) of the bushing (3) and with the surface of the connector (C), and the rest of the clamping screw (2) is removed.

5. A screw as per claim 4, **characterised in that** the rim (9) of the bushing (3) has a recessed portion (9') being fit to receive the stops (T1, T2) of the clamping screw (2).

6. A screw as per claim 2, **characterised in that** the breakage of the necked-down portion (E1) having a smaller diameter at an intermediary position in the bushing (3) during the clamping operation once the smaller stop (T1) has passed along a portion of the thread (7) of the bushing (3) corresponds to a cable (CA) having an intermediary thickness, the rest of the clamping screw (2) being thereupon removed.

7. A screw as per claims 1 and 2, **characterised in that** the head (5, 3A) of the screw has the configuration (10) corresponding to the desired type of clamping wrench.

8. A screw as per claims 1 and 2, **characterised in that** the stops (T1, T2, R) of the clamping screw (2, 1) and the outer rim (9) of the bushing (3) are annular and are such as to be put in a flush arrangement with respect to the outer surface of the connector (C).

## Patentansprüche

1. Schraube für elektrische Verbinder, die geeignet ist, um mit einer im Wesentlichen radialen und mit einem durchgehenden Gewinde versehenen Bohrung (T) eines elektrischen Verbinders (C) in Eingriff gebracht zu werden, um die Klemmung des entsprechenden Kabels (CA), das im Verbinder (C) angeordnet ist, zu bewirken, wobei die Schraube (1, 2) einen Gewindeabschnitt (1A, 6) und einen Kopf (3A, 5) aufweist und einen ersten ringförmigen verengten Abschnitt (E1) umfasst, der an den Gewindeabschnitt (1A, 6) angrenzt, wobei in Verbindung mit einem entsprechenden Anzugsmoment beim Anziehen der Schraube der erste verengte Abschnitt (E1) bricht und das Gewindeteil (1A, 6) vollkommen im Inneren der Bohrung (T) des Verbinders (C) aufgenommen wird und der restliche Körper der Schraube (1, 2), bestehend aus dem Kopf (3A, 5) der Schraube, anschließend entfernt wird, **dadurch gekennzeichnet, dass** die Schraube zwischen den Endabschnitten, nämlich dem Gewindeabschnitt (1A, 6), der geeignet ist, um mit der Bohrung (T) eines Verbinders (C) in Eingriff gebracht zu werden, und dem Kopf (3A, 5) der Schraube, einen Zwischenabschnitt (2A, 4) und einen Endanschlag (R, T2) aufweist, die an einen zweiten verengten Abschnitt (E2) angrenzen, der am äußeren Rand des Zwischenabschnitts (2A, 4) vorgesehen ist, wobei die Klemmschraube (1, 2) in der Endlage auf ihrem Weg gestoppt wird, sodass der zweite verengte Abschnitt (E2) bricht und der besagte Endanschlag (R, T2) auf diese Weise mit dem Rand der Bohrung (T) bündig abschließt; dabei werden der Zwischenabschnitt (2A, 4) und der Gewindeabschnitt (1A, 6) vollkommen in die Bohrung (T) des Verbinders (C) aufgenommen, wobei der Endanschlag (R, T2) so ausgelegt ist, dass der Gewindeabschnitt (1A) der Schraube (1) nicht über die Gewindefläche der Bohrung (T) herausragen kann, sodass die Schraube (1) daran gehindert wird, aus ihrer Aufnahme herauszutreten und somit fest in der Bohrung stecken bleibt.

2. Schraube nach Anspruch 1, **dadurch gekennzeichnet, dass** die Schraube (1) die Klemmschraube (2) zusammen mit einer Buchse (3) umfasst, wobei die Klemmschraube (2) zwischen dem Kopf (5, 3A) der Schraube und dem Gewindeabschnitt (6, 1A) den Zwischenabschnitt (4, 2A) aufweist, an welchem mindestens zwei verengte Abschnitte (E1, E2) vorgesehen sind, von denen jeder einem entsprechenden Anschlag (T1, T2) zugeordnet ist, wobei der verengte Abschnitt und der Anschlag (E1, T1) näher am Gewindeabschnitt (6, 1A) liegen bzw. einen kleineren Durchmesser und Umriss haben als der verengte Abschnitt und der Anschlag (E2, T2), die näher am Kopf (5, 3A) der Schraube liegen, wobei die vorgenannte Buchse (3) innen (7) und außen (8) mit einem Gewinde versehen ist, um auf diese Weise mit der entsprechenden Bohrung (T) des Verbinders (C) in Eingriff gebracht werden zu können, und wobei die Klemmschraube (2) geeignet ist, um im Inneren der besagten Buchse (3) in Eingriff gebracht zu werden, um auf diese Weise die Klemmung des Kabels (CA) zu bewirken; dabei ist die Buchse (3) geeignet, um den Gewindeabschnitt der Bohrung (T) zu verlängern, damit die Klemmschraube (2) mit dem Verbinder (C) in Eingriff gebracht und somit eine einschraubbare Klemmschraube (2) bewerkstelligt werden kann, wobei die Buchse (3) mit einem äußeren Rand (9) versehen ist, der als Endanschlag dient, um das Ende des Einschraubens der Buchse in die Bohrung (T) zu definieren, wobei während des Einschraubvorgangs und nach Anstoßen des jeweiligen Anschlags (T1, T2) an den äußeren Rand (9) der Buchse (3) die Klemmschraube (2) je nach Stärke des Kabels (CA), das im Verbinder (C) angeordnet ist, an einem der verengten Abschnitte (E1, E2) bricht.

3. Schraube nach Anspruch 2, **dadurch gekennzeichnet, dass** der Bruch am verengten Abschnitt (E1), der einen kleineren Durchmesser hat und näher am Gewindeabschnitt (6, 1A) liegt, während des Klemmvorgangs und nach Anstoßen des jeweiligen kleineren Anschlags (T1) an den äußeren Rand (9) der Buchse (3), womit der Einschraubvorgangs begrenzt wird, einem Kabel (CA) entspricht, das eine größere Stärke besitzt, und **dadurch gekennzeichnet, dass** der Bruch des verengten Abschnitts (E2), der einen größeren Durchmesser hat und näher am Kopf (5, 3A) der Schraube liegt, während des Klemmvorgangs und nachdem der jeweilige kleinere Anschlag (T1) den Gewindeabschnitt (7) der Buchse (3) passiert hat und der jeweilige größere Anschlag (T2) an den äußeren Rand (9) der Buchse (3) angestoßen ist und somit den Einschraubvorgang begrenzt hat, einem Kabel (CA) entspricht, das eine kleinere Stärke besitzt.

4. Schraube nach Anspruch 3, **dadurch gekennzeichnet, dass** nach dem Bruch die Anschläge (T1, T2) mit dem Rand (9) der Buchse (3) und mit der Oberfläche des Verbinders (C) bündig abschließen und dass der Rest der Klemmschraube (2) entfernt wird.

5. Schraube nach Anspruch 4, **dadurch gekennzeichnet, dass** der Rand (9) der Buchse (3) eine Aussparung (9') aufweist, die geeignet ist, um die Anschläge (T1, T2) der Klemmschraube (2) aufzunehmen.

6. Schraube nach Anspruch 2, **dadurch gekennzeichnet, dass** der an einer Zwischenposition in der Buchse (3) während des Klemmvorgangs, nachdem der kleinere Anschlag (T1) einen Abschnitt des Gewindes (7) der Buchse (3) passiert hat, entstehende Bruch des verengten Abschnitts (E1), der einen kleineren Durchmesser besitzt, einem Kabel (CA) mit einer Zwischenstärke entspricht und dass nach dem Bruch der Rest der Klemmschraube (2) entfernt wird.

7. Schraube nach Anspruch 1 und 2, **dadurch gekennzeichnet, dass** der Kopf (5, 3A) der Schraube die Ausgestaltung (10) besitzt, die dem gewünschten Spannschlüsseltyp entspricht.

8. Schraube nach Anspruch 1 und 2, **dadurch gekennzeichnet, dass** die Anschläge (T1, T2, R) der Klemmschraube (2, 1) und der äußere Rand (9) der Buchse (3) ringförmig und so ausgebildet sind, dass sie mit der Außenfläche des Verbinders (C) bündig abschließen.

## Revendications

1. Une vis pour des connecteurs électriques qui est apte à être insérée par filetage dans une perforation (T) essentiellement radiale et filetée d'un connecteur électrique (C) pour réaliser le serrage du câble correspondant (CA) disposé dans le connecteur (C), la vis (1, 2) ayant une partie filetée (1A, 6) et une tête (3A, 5) et comprenant une première portion annulaire rétrécie vers le bas (E1) qui est adjacente à la partie filetée (1A, 6), et qui est en correspondance avec un couple de serrage respectif de sorte qu'en serrant la vis, la première partie rétrécie vers le bas (E1) se casse et laisse ainsi la partie filetée (1A, 6) totalement logée à l'intérieur de la perforation (T) du connecteur (C), le reste du corps de la vis (1, 2) y compris la tête (3A, 5) de la vis étant ensuite éliminé, **caractérisée en ce qu'**entre les parties extrêmes correspondant à la partie filetée (1A, 6) étant apte à être insérée par filetage dans la perforation (T) du connecteur (C) et dans la tête (3A, 5) de la vis cette dernière comporte une partie intermédiaire (2A, 4) et une butée de fin de course (R, T2) qui est adjacente à une seconde partie rétrécie vers le bas (E2) située sur le bord extérieur de la partie intermédiaire (2A, 4), à la fin de course la vis de serrage (1, 2) étant arrêté dans sa course et ainsi se brisant à la deuxième partie rétrécie vers le bas (E2), ladite butée de fin de course (R, T2) étant ainsi au ras avec le bord de la perforation (T), la partie intermédiaire (2A, 4) et la partie filetée (1A, 6) étant ainsi totalement logées dans la perforation (T) du connecteur (C), la butée de fin de course (R, T2) étant dimensionnée de sorte que la partie filetée (1A) de la vis (1) ne peut pas dépasser la surface filetée de la perforation (T), empêchant la vis (1) de sortir de son logement et permettant d'être bloquée dans la perforation.

2. Vis selon la revendication 1, **caractérisée en ce que** la vis (1) comprend la vis de serrage (2) en combinaison avec une douille (3), ladite vis de serrage (2) ayant la portion intermédiaire (4, 2A) entre la tête (5, 3A) de la vis et la partie filetée (6, 1A) et étant au niveau de ladite portion intermédiaire pourvue d'au moins deux parties rétrécies vers le bas (E1, E2) étant chacune associée à une butée respective (T1, T2), dont la partie rétrécie vers le bas et la butée (E1, T1) qui sont plus proches de la partie filetée (6, 1A) présentent respectivement un contour et un diamètre plus petits par rapport à la partie rétrécie vers le bas et la butée (E2, T2) qui sont plus proches de la tête (5, 3A) de la vis, la douille (3) précitée étant internement (7) et extérieurement (8) filetée afin d'être ainsi en mesure d'être insérée par filetage dans la perforation correspondante (T) du connecteur (C), la vis de serrage (2) étant apte à être insérée par filetage à l'intérieur de ladite douille (3) afin d'effectuer ainsi le serrage du câble (CA), la douille (3) étant ainsi apte à augmenter la longueur de la partie filetée de la perforation (T) pour la vis de serrage (2) destinée à être insérée par filetage dans le connecteur (C), constituant ainsi une vis de serrage (2) qui est apte à être vissée, la douille (3) étant munie d'un rebord extérieur (9) servant de butée pour définir la fin du vissage de la douille (3) dans la perforation (T), lors de la réalisation de l'opération de vissage et ayant la butée correspondante (T1, T2) en contact en butée avec le rebord extérieur (9) de la douille (3), la vis de serrage (2) se brisant à l'une des parties rétrécies vers le bas (E1, E2) en correspondance avec l'épaisseur du câble (CA) qui est disposé dans le connecteur (C).

3. Une vis selon la revendication 2, **caractérisée en ce que** la rupture de la partie rétrécie vers le bas (E1) qui a un diamètre inférieur et qui est plus proche de la partie filetée (6, 1A) au cours de l'opération de serrage et quand la plus petite butée respective (T1) est en contact en butée avec le rebord extérieur (9) de la douille (3) et a donc fixé la limite finale pour le vissage pour l'opération correspond à un câble (CA) ayant une épaisseur plus grande, et **en ce que** la rupture de la partie rétrécie vers le bas (E2) qui a un plus grand diamètre et qui est plus proche de la tête (5, 3A) de la vis lors de l'opération de serrage et quand la plus petite butée (T1) est passée le long de la partie filetée (7) de la douille (3) et la plus grande butée respective (T2) est en contact en butée avec le rebord extérieur (9) de la douille (3) et a donc fixé la limite finale pour le vissage pour l'opération correspond à un câble (CA) ayant une épaisseur plus petite.

4. Une vis selon la revendication 3, **caractérisée en ce qu'**après la rupture, les butées (T1, T2) sont à niveau avec le rebord (9) de la douille (3) et avec la surface du connecteur (C), et le reste de la vis de serrage (2) est supprimé.

5. Une vis selon la revendication 4, **caractérisée en ce que** le rebord (9) de la douille (3) présente une partie évidée (9') qui est apte à recevoir les butées (T1, T2) de la vis de serrage (2).

6. Une vis selon la revendication 2, **caractérisée en ce que** la rupture de la partie rétrécie vers le bas (E1) qui a un diamètre plus petit à une position intermédiaire dans la douille (3) pendant l'opération de serrage quand la plus petite butée (T1) est passée le long d'une portion du filetage (7) de la douille (3) correspond à un câble (CA) ayant une épaisseur intermédiaire, le reste de la vis de serrage (2) étant alors supprimé.

7. Une vis selon les revendications 1 et 2, **caractérisée en ce que** la tête (5, 3A) de la vis a la configuration (10) correspondant au type de clé de serrage souhaité.

8. Une vis selon les revendications 1 et 2, **caractérisée en ce que** les butées ( T1, T2, R) de la vis de serrage (2, 1) et le bord extérieur (9) de la douille (3) sont annulaires et sont aptes à être disposés dans un arrangement aligné par rapport à la surface extérieure du connecteur (C).
